# EUROPÄISCHE PATENTANMELDUNG

(11) **EP 1 695 787 A1**
(43) Veröffentlichungstag der Anmeldung: **30.08.2006**
(21) Anmeldenummer: 05004168.0
(22) Anmeldetag: 25.02.2005
(51) Int. Cl.: B23K 26/067

(54) **Laserbearbeitungsverfahren für einen Mehrstationenbetrieb**

(71) Anmelder: Trumpf Laser- und Systemtechnik GmbH, 71254 Ditzingen (DE)
(72) Erfinder: Andreasch Wolfgang, Dr., 71384 Weinstadt (DE)
(74) Vertreter: Kohler Schmid Möbus

(57) **Zusammenfassung**

Bei einem Laserbearbeitungsverfahren für einen Betrieb mit mehreren Arbeitsstationen für jeweils ein Werkstück mithilfe eines Lasers zur Erzeugung eines Laserstrahls und einer Laserstrahlablenkvorrichtung, weist die Laserstrahlablenkvorrichtung einen drehbar gelagerten Ablenkspiegel auf, damit der Laserstrahl durch Drehen des Ablenkspiegels um seine Rotationsachse in Richtung mehrerer Arbeitsstationen abgelenkt wird.

## Beschreibung

Die Erfindung betrifft ein Laserbearbeitungsverfahren für einen Betrieb mit mehreren Arbeitsstationen für jeweils ein Werkstück mithilfe eines Lasers zur Erzeugung eines Laserstrahls und einer Laserstrahlablenkvorrichtung.

Die Realisierung eines Mehrstationenbetriebs erfolgt bisher nach folgenden Prinzipien:
- Verfahren der kompletten Scanneroptik von Arbeitsstation zu Arbeitsstation;
- Je Arbeitsstation ist eine Scanneroptik und ein Strahlmanagement mittels Strahlweiche(n) erforderlich.

In beiden Fällen sind mehr Bewegungsachsen bzw. Antriebe notwendig. Im Fall der Strahlweiche erhöht sich darüber hinaus die Anzahl der Umlenkspiegel.

Durch die DE10252443 A1 ist eine Laserstrahlablenkvorrichtung mit einem drehbar gelagerten Ablenkspiegel bekannt geworden.

Der Anmelder hat sich die Aufgabe gestellt, ein Laserbearbeitungsverfahren für einen Mehrstationenbetrieb zu entwickeln, das sich vom Stand der Technik durch einen reduzierten konstruktiven Aufwand unterscheidet.

Diese Aufgabe wird durch ein Laserbearbeitungsverfahren für einen Betrieb mit mehreren Arbeitsstationen für jeweils mindestens ein Werkstück mithilfe eines Lasers zur Erzeugung eines Laserstrahls und einer Laserstrahlablenkvorrichtung gelöst, wobei die Laserstrahlablenkvorrichtung einen drehbar gelagerten Ablenkspiegel aufweist, damit der Laserstrahl durch Drehen des Ablenkspiegels um seine Rotationsachse in Richtung mehrerer Arbeitsstationen abgelenkt wird. Der Wechsel von einer Arbeitsstation in die andere erfolgt durch Drehen des Ablenkspiegels um die Rotationsachse, d.h. durch eine für die Spiegelverstellung zusätzlich nutzbare hochdynamische Bewegungsachse. Die Realisierung des erfindungsgemäßen Mehrstationenbetriebs erfolgt ohne zusätzliche Bewegungsachse, ohne zusätzlichen Antrieb und ohne Strahlweiche.

Bevorzugt sind die Arbeitsstationen gegenüberliegend angeordnet und die Werkstücke vertikal aufgespannt. Die vertikale Aufspannung der Werkstücke und die gegenüberliegenden Arbeitsräume sind vorteilhaft für die Integration in Fertigungslinien, weil dadurch insbesondere günstigere ergonomische Bedingungen beim Auf- und Abspannen der Werkstücke entstehen.

Für eine zweidimensionale Laserbearbeitung ist der Ablenkspiegel um eine in seiner Spiegelfläche liegende, erste Schwenkachse und um eine rechtwinklig zur ersten Schwenkachse verlaufende, zweite Schwenkachse schwenkbar gelagert.

Ein Ausführungsbeispiel der Erfindung ist in der Zeichnung schematisch dargestellt und wird nachfolgend mit Bezug zur Figur der Zeichnung näher erläutert. Es zeigt:
- **Figur 1a**: eine Laserbearbeitungsmaschine in perspektivischer Ansicht vor der Laserbearbeitung;
- **Figur 1b**: die eine Laserbearbeitungsmaschine gemäß Figur 1a mit angedeuteten Laserbearbeitungsbereichen;
- **Figur 2a**: die Laserbearbeitungsmaschine in einer weiteren Ansicht vor der Laserbearbeitung;
- **Figur 2b**: die eine Laserbearbeitungsmaschine gemäß Figur 2a mit angedeuteten Laserbearbeitungsbereichen;
- **Figur 3**: eine erste mögliche Ausführung einer Laserstrahlablenkvorrichtung der Laserbearbeitungsmaschine;
- Figur **4**: eine zweite mögliche Ausführung der Laserstrahlablenkvorrichtung der Laserbearbeitungsmaschine.

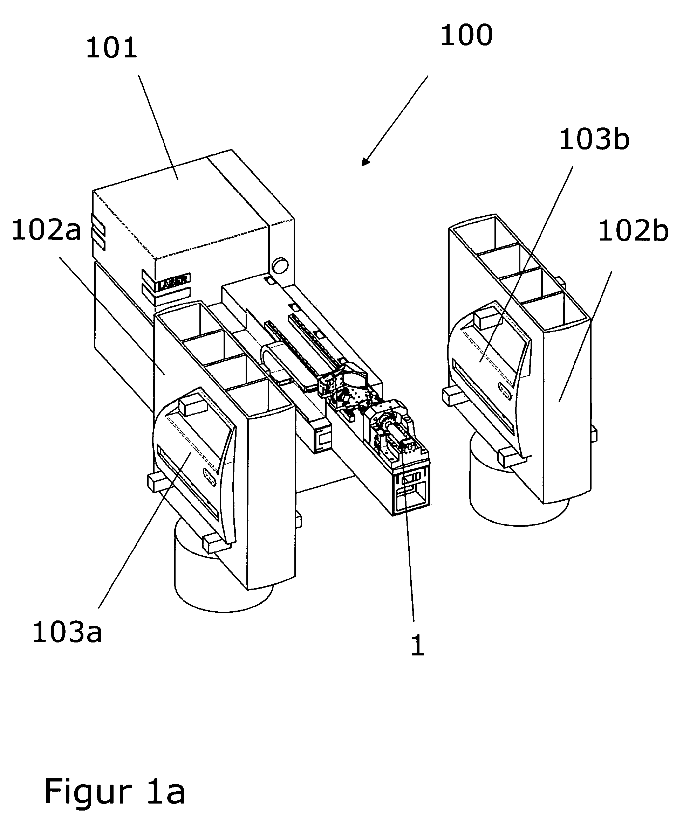

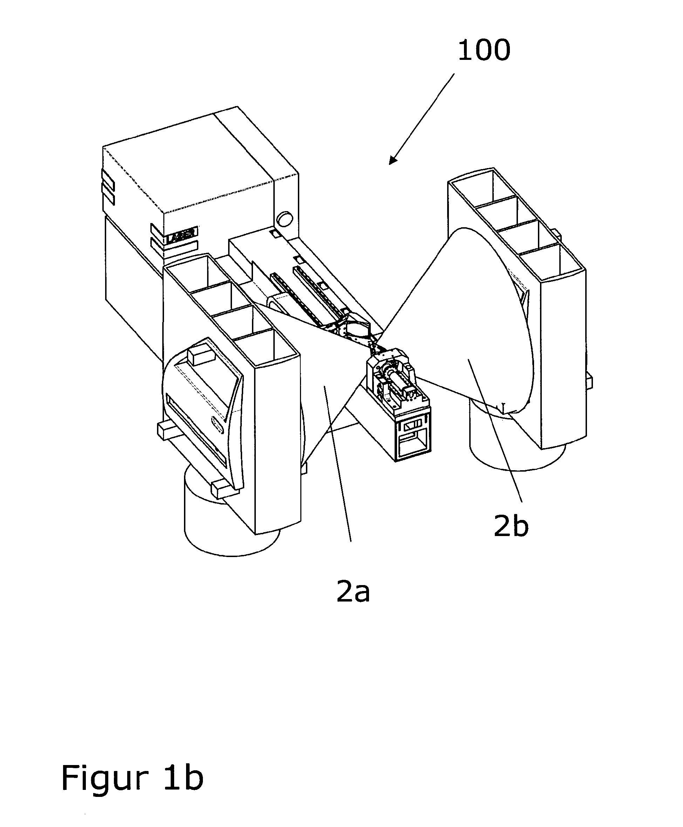

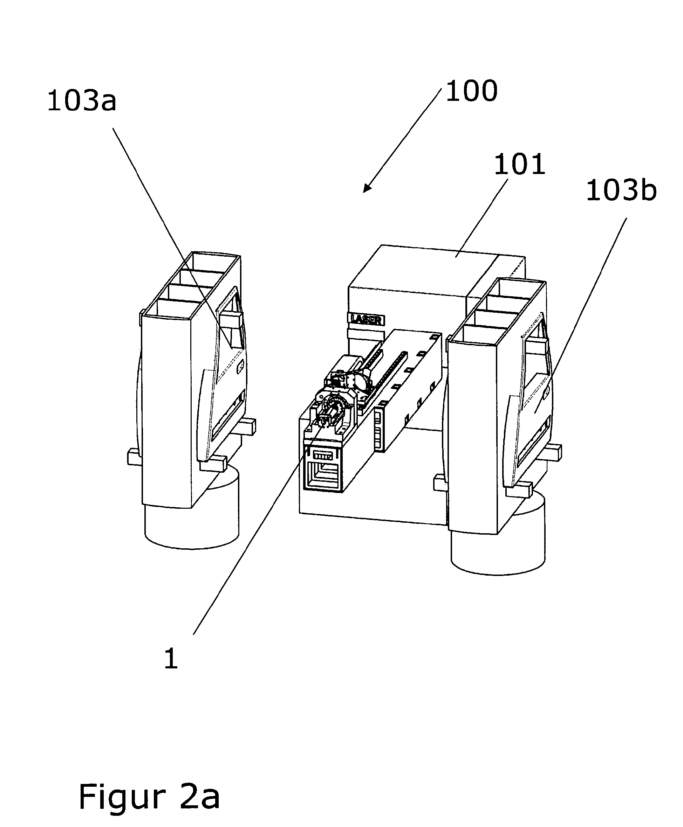

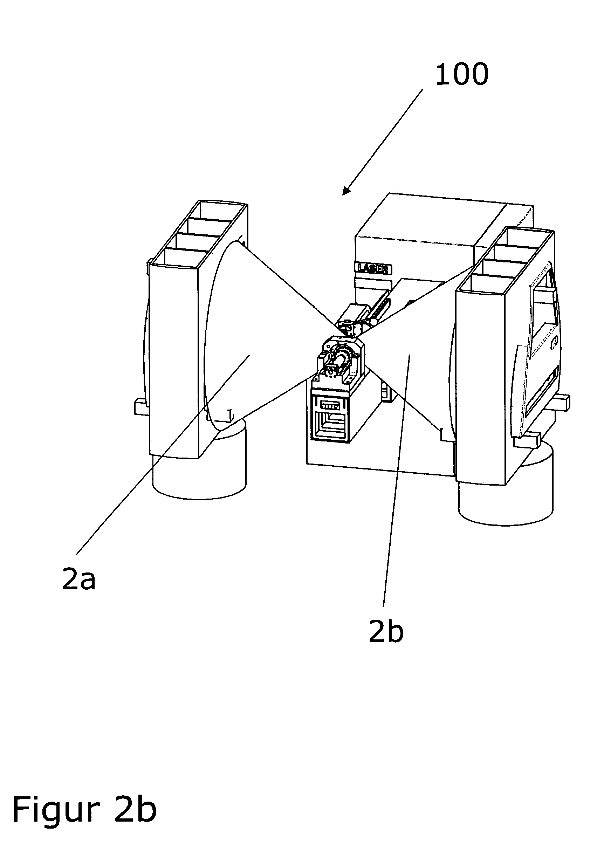

Aus den **Figuren 1a, 1b** und **2a, 2b** ist der schematisierte Aufbau einer Laserbearbeitungsmaschine **100** ersichtlich, die einen Laser zur Erzeugung eines Laserstrahls und eine Laserstrahlablenkvorrichtung **1** umfasst. Mithilfe der Laserstrahlablenkvorrichtung 1 kann der erzeugte Laserstrahl entweder innerhalb eines Abtastbereichs **2a** oder innerhalb eines Abtastbereichs **2b** abgelenkt werden, um von Werkstückaufnahmen **102a, 102b** vertikal aufgespannte Bauteile **103a, 103b** bearbeiten zu können. Die Laserstrahlablenkvorrichtung 1 ermöglicht es, den gesamten Bereich der Bauteile 103a, 103b bearbeiten zu können, wie durch die Abtastbereiche oder Laserbearbeitungsbereiche darstellenden Strahlkegel 2a, 2b angedeutet. Die Verfahrbereiche der Achsen der Laserstrahlablenkvorrichtung 1 führen zu mindestens zwei zueinander gegenüber liegend angeordneten Arbeitsstationen. Der Wechsel von einem Arbeitsbereich in den anderen erfolgt durch Drehen um eine Rotationsachse der Laserstrahlablenkvorrichtung 1.

Neben zwei sind auch drei Arbeitsstationen und damit ein Drei-Stationen-Betrieb denkbar. Der dritte Arbeitsbereich könnte sich beispielsweise im rechten Winkel oder in einem beliebigen anderen Winkel zwischen den beiden gegenüberliegenden Arbeitbereichen befinden.

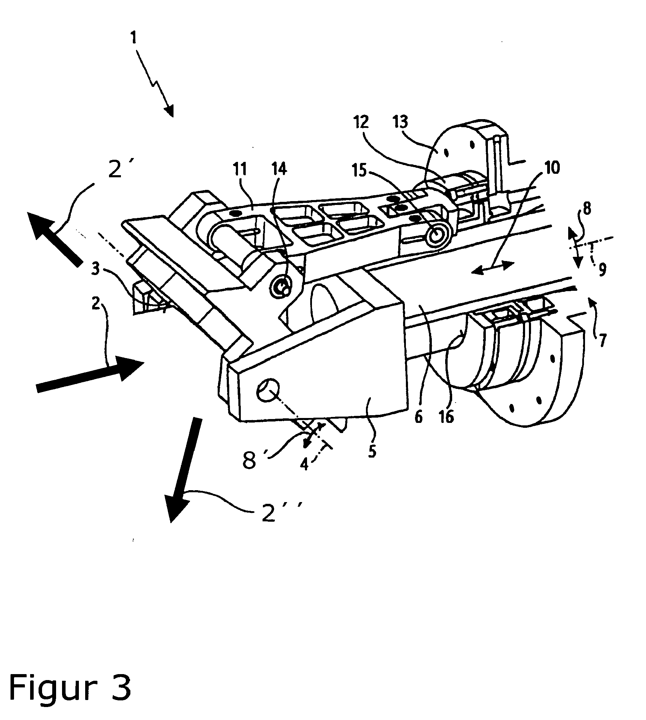

Die in **Figur 3** gezeigte Vorrichtung 1 dient zur Ablenkung eines Laserstrahls **2** (Ablenkung 2' oder 2'' innerhalb der Abtastbereiche 2a oder 2b) mittels eines Ablenkspiegels **3,** der um eine erste Schwenkachse **4** in einer gabelförmigen Halterung **5** drehbar gelagert ist (siehe Doppelpfeil **8').** Die Halterung 5 ist an dem Antriebselement **6** eines Dreh-Schub-Antriebs **7** befestigt, das gleichzeitig oder separat eine Rotationsbewegung (Doppelpfeil **8)** um eine rechtwinklig zur ersten Schwenkachse 4 verlaufende, zweite Schwenkachse **9** und eine Translationsbewegung (Doppelpfeil **10)** ausführen kann. Diese zweite Schwenkachse 9 verläuft kollinear zur optischen Achse des auf die Ablenkvorrichtung 1 einfallenden Laserstrahls 2. Der Ablenkspiegel 3 ist über einen Hebel **11** gelenkig mit einem ringförmigen Verbindungselement **12** verbunden, das axial unverschiebbar an einem Gehäuseflansch **13** des Dreh-Schub-Antriebs 7 um die zweite Schwenkachse 9 drehbar gelagert ist. Der Hebel 11 ist rückseitig am Ablenkspiegel 3 und am Verbindungselement 12 um jeweils parallel zur ersten Schwenkachse 4 verlaufende Achsen **14, 15** drehbar gelagert. Das Antriebselement 6 erstreckt sich durch die Ringöffnung **16** des Verbindungselements 12 hindurch bis zur Halterung 5, die zwischen Ablenkspiegel 3 und Verbindungselement 12 angeordnet ist.

Vorteilhaft kann zwischen Antriebselement 6 und Verbindungselement 12 noch eine Drehkopplung vorgesehen sein, die in Figur 3 aber nicht gezeigt ist.

Durch Verdrehen des Antriebselements 6 werden die Halterung 5 und damit auch der Ablenkspiegel 3 um die zweite Schwenkachse 9 geschwenkt. Eine Schubbewegung des Antriebselements 6 längs der zweiten Schwenkachse 9 bewirkt eine Verschiebung der Halterung 5 gegenüber dem Verbindungselement 12. Da das Verbindungselement 12 unverschiebbar gelagert ist, wird der Ablenkspiegel 3 um die erste Schwenkachse 4 geschwenkt. Durch gleichzeitiges Verschwenken und Verschieben der Halterung 5 mittels des Antriebselements 6 lässt sich der Ablenkspiegel 3 um beide Schwenkachsen 4, 9 beliebig verkippen und dadurch der einfallende Laserstrahl 2 zweidimensional ablenken.

Das Antriebselement 6, das einen translativen und einen rotativen Freiheitsgrad besitzt, kann in Wälz-, Luft- oder Magnetlagerungen gelagert sein. Als Dreh-Schub-Antrieb 7 kann beispielsweise ein tubularer Linearmotor in Kombination mit einem Torque-Motor mit unterschiedlich langen Primär- und Sekundärteilen eingesetzt werden. Diese beiden Motoren sind Drehstromsynchronmotoren und ermöglichen die stationäre Anordnung ihrer schweren kupfer- und eisenbehafteten Primärspulenteile.

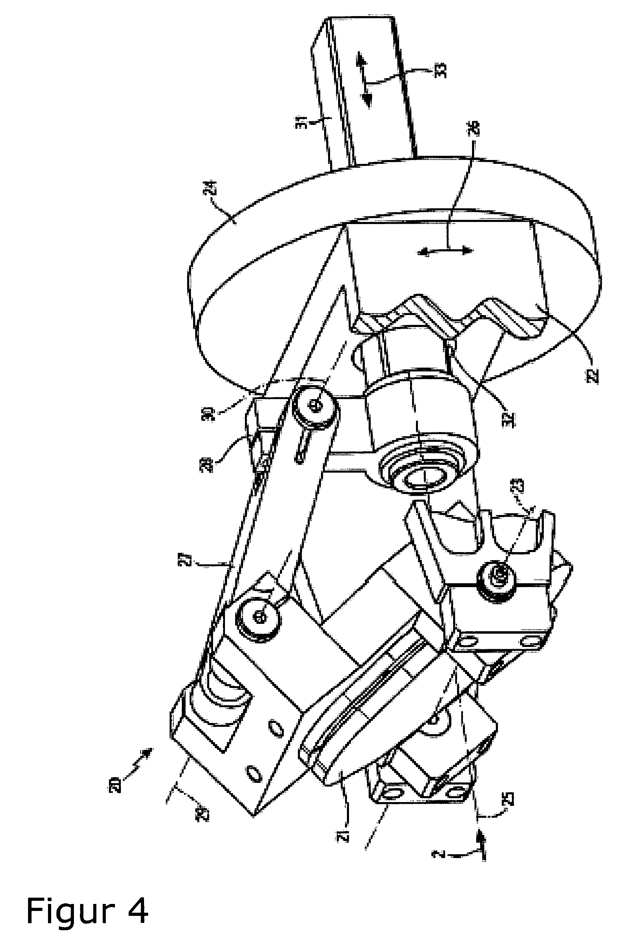

Bei der in **Figur 4** gezeigten Ablenkvorrichtung **20** ist der Ablenkspiegel **21** ebenfalls in einer gabelförmigen Halterung **22** schwenkbar um eine in seiner Spiegelfläche liegende erste Schwenkachse **23** gelagert. Die Halterung 22 ist in einem Gehäuseflansch **24** schwenkbar um eine rechtwinklig zur ersten Schwenkachse 23 verlaufende, zweite Schwenkachse **25,** aber längs der zweiten Schwenkachse 25 unverschiebbar gelagert. Diese zweite Schwenkachse 25 verläuft kollinear zur optischen Achse des auf die Ablenkvorrichtung 20 einfallenden Laserstrahls 2. Das Verdrehen (Doppelpfeil **26)** der Halterung 22 um die zweite Schwenkachse 25 erfolgt mittels eines Drehantriebs (nicht gezeigt), z.B. mittels eines Torque-Motors mit dem Prinzip eines Drehstromsynchronmotors. Der Ablenkspiegel 21 ist über einen Hebel **27** mit einem Verbindungselement **28,** das zwischen Ablenkspiegel 21 und Halterung 22 angeordnet ist, gelenkig verbunden. Der Hebel 27 ist rückseitig am Ablenkspiegel 21 und am Verbindungselement 28 um jeweils parallel zur ersten Schwenkachse 23 verlaufende Achsen **29, 30** drehbar gelagert. Das Antriebselement 31 eines Linearantriebs (nicht gezeigt) erstreckt sich durch eine zentrale Öffnung **32** der Halterung 22 bis zum Verbindungselement 28, das auf dem freien Ende des Antriebselements 31 drehbar, aber axial unverschiebbar gelagert ist. Im Unterschied zum Verbindungselement 12 der Ablenkvorrichtung 1 führt das Verbindungselement 28 eine Linear- und eine Rotationsbewegung aus.

Durch Verschwenken der Halterung 22 um die zweite Schwenkachse 25 wird der Ablenkspiegel 21 um die zweite Schwenkachse 25 mitgeschwenkt. Eine Linearbewegung des Antriebselements 31 längs der zweiten Schwenkachse 25 (Doppelpfeil **33)** bewirkt, da die Halterung 22 unverschiebbar gelagert ist, eine Verschiebung des Verbindungselements 28 gegenüber der Halterung 22, wodurch der Ablenkspiegel 21 um die erste Schwenkachse 23 geschwenkt wird. Durch gleichzeitiges Verschwenken der Halterung 22 und Verschieben des Verbindungselements 28 lässt sich der Ablenkspiegel 21 um beide Schwenkachsen 23, 25 beliebig verkippen und dadurch der einfallende Laserstrahl 2 zweidimensional ablenken.

## Patentansprüche

1. Laserbearbeitungsverfahren für einen Betrieb mit mehreren Arbeitsstationen für jeweils ein Werkstück mithilfe eines Lasers zur Erzeugung eines Laserstrahls und einer Laserstrahlablenkvorrichtung, **dadurch gekennzeichnet, dass** die Laserstrahlablenkvorrichtung einen drehbar gelagerten Ablenkspiegel aufweist, damit der Laserstrahl durch Drehen des Ablenkspiegels um seine Rotationsachse in Richtung mehrerer Arbeitsstationen abgelenkt wird.

2. Laserbearbeitungsverfahren nach Anspruch 1, **dadurch gekennzeichnet, dass** die Arbeitsstationen gegenüberliegend angeordnet sind.

3. Laserbearbeitungsverfahren nach Anspruch 1 oder 2, **dadurch gekennzeichnet, dass** die Werkstücke vertikal aufgespannt sind.

4. Laserbearbeitungsverfahren nach einem der vorhergehenden Ansprüche, **dadurch gekennzeichnet, dass** der Ablenkspiegel um eine in seiner Spiegelfläche liegende, erste Schwenkachse und um eine rechtwinklig zur ersten Schwenkachse verlaufende, zweite Schwenkachse schwenkbar gelagert ist.
